(19) Europäisches Patentamt

European Patent Office

Office européen des brevets

(11) **EP 1 589 444 A2**

(12) **EUROPEAN PATENT APPLICATION**

(43) Date of publication:
26.10.2005 Bulletin 2005/43

(51) Int Cl.⁷: **G06F 17/30**

(21) Application number: 05252436.0

(22) Date of filing: 19.04.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **21.04.2004 KR 2004027578**
**11.04.2005 KR 2005029960**

(71) Applicants:
• **SAMSUNG ELECTRONICS CO., LTD.**
**Suwon-city, Gyeonggi-do (KR)**
• **Research & Industrial Cooperation Group**
**Daejeon-si (KR)**

(72) Inventors:
• **Kim, Sangkyun**
**Giheung-eub, Yongin-si Gyeonggi-do (KR)**

• **Moon, Youngsu**
**Yangcheon-gu Seoul (KR)**
• **Kim, Jiyeun**
**Songpa-gu Seoul (KR)**
• **Ro, Yongman**
**Yuseong-gu Daejeon-si (KR)**
• **Yang, Seungji**
**Wonju-si Gangwon-do (KR)**

(74) Representative: **Ertl, Nicholas Justin et al**
**Elkington and Fife LLP,**
**Prospect House,**
**8 Pembroke Road**
**Sevenoaks, Kent TN13 1XR (GB)**

(54) **Method, medium, and apparatus for detecting situation change of digital photos and method, medium, and apparatus for situation-based photo clustering in digital photo album**

(57) An apparatus, medium, and method for detecting a situation change of a digital photo, and a method, medium, and apparatus for situation-based clustering in a digital photo album. The apparatus for situation-based clustering in a digital photo album includes: a photo description information generation unit generating photo description information describing a photo and including at least a photo descriptor; an albuming tool description information generation unit generating albuming tool description information including a predetermined parameter for situation-based clustering of digital photos; an albuming tool performing photo albuming through situation-based clustering by using at least the photo description information and the albuming tool description information; a photo group information generation unit generating predetermined photo group description information from the output of the albuming tool; and a photo albuming information generation unit generating photo albuming information by using photo description information and photo group description information.

FIG. 1

EP 1 589 444 A2

**Description**

BACKGROUND OF THE INVENTION

Embodiments of the present invention relate to digital albums, and more particularly, to apparatuses, media, and methods for detecting a situation change of a digital photo, and a method, medium, and apparatus for situation-based clustering in a digital photo album.

Recently, the use of digital cameras have become widespread. This is attributed to advantages of the digital camera not needing film and film printing processes, unlike analog cameras, and being able to store and delete contents at any time by using a digital memory device. Since the performance of the digital cameras have increased, all while sizes have been minimized in line with the development of digital camera technologies, users can essentially now carry digital cameras and take photos any time, any place. With the development of digital image processing technologies, the quality of a digital camera image is approaching that of the analog camera, and users can share digital contents more freely because of easier storage and transmission of the digital contents than analog contents. Accordingly, digital camera usage is increasing, causing prices to fall, and as a result, demand for the same to increase even further.

In particular, with the recent development of memory technologies, high capacity memories are now widely used, and with the development of digital image compression technologies that do not compromise picture quality, users can now store hundreds to thousands of photos in one memory. As a result, many users are using digital albums to manage so many photos.

Generally, a digital photo album is used to transfer photos taken by a user, from a digital camera or a memory card to a local storage apparatus, and to manage the photos conveniently. Users browse many photos in a time/date series or in order of event or share the photos with other users by using the photo album.

However, many users are finding it inconvenient to manage photos by using the conventional digital photo albums. This is because most of the conventional digital albums leave jobs for grouping and labeling photos to users. As the number of photos increases, it becomes more difficult for a user to cluster one by one, such that it becomes more inconvenient. Accordingly, a tool for enabling users to more easily and quickly find desired photos and generate a desired group of a plurality of photos is greatly needed.

In Requirement for photoware (ACM CSCW, 2002), David Frohlich investigated the function of a photo album required by users through a survey of many users. Most interviewees thought storing photos of their lifetime in albums to be valuable. However, they felt the time and effort required for grouping many photos one by one to be inconvenient and experienced difficulties in sharing photos with other people.

In the related research and systems of the initial stage, photos were grouped by using only time/date information, i.e., the time/date when a photo was taken. As a leading research, there was Adrian Graham's "Time as essence for photo browsing through personal digital libraries", (ACM JCDL, 2002). As in this research, by using only the taken time/date, photos can be grouped roughly. However, this method cannot be used when a photo is recorded without time/date information or time/date information is lost later during photo editing processes. In addition, it is highly probable that undesired grouping results will occur if photos taken in similar time/date bands in different situations by using many cameras are grouped at one time.

In Kerry Rodden's "How do people manage their digital photographs" (ACM CHI, 2002), a photo album with a function capable of sorting photos using time/date information was developed and users were interviewed on the utility of the developed system. It shows that even only sorting photos in order of their respective taken time/dates helps users construct albums. However, the article added that, in order to more faithfully satisfy the requirements of users, content-based search or event-based photo clustering function should be added.

A method to solve these problems of photo grouping by using only time/date information currently includes using content-based feature values of a photo. So far there has been research performed using time/date information of photos and content-based feature values together. However, in most cases only color information of a photo is used as a content-based feature value. As a most representative method, Alexander C. Loui's automated event clustering and quality screening of consumer pictures for digital albuming (IEEE Transaction on Multimedia, vol. 5, No. 3, pp. 390-401, 200-3) suggests a method clustering a series of photos based on events by using time/date and color information of photos. However, since only color histogram information of a photo is used as a content-based feature value, it is very sensitive to brightness changes and it is difficult to sense changes in texture and shapes.

Today, most of digital photo files comply with an exchangeable image file (Exif) format. Exif is a standard file format made by Japan Electronic Industry Development Association (JEIDA). An Exif file stores photographing information such as information on a time/date when a photo is taken, and camera status information as well as pixel information of a photo.

Also, MPEG-7, ISO/IEC/JTC1/SC29/WG11 is standardizing element technologies required for content-based search with description interfaces to express descriptors and the relations between descriptors and description schemes. A method for extracting content-based feature values such as color, texture, shape, and motion is suggested as a descriptor. In order to model contents, the description scheme defines the relation between two or more descriptors and the description schemes and defines how data is expressed.

Accordingly, if various information that can be obtained from a photo file and content-based feature values are used together, more effective photo grouping and searching can be performed. Accordingly, a description scheme to express integrally this variety of information items and a photo album providing photo grouping and searching using the structure are needed.

## SUMMARY OF THE INVENTION

According to a first aspect of the invention, there is provided an apparatus for detecting a situation change in digital photos, including a photo sort unit sorting photos, desired to be situation-based clustered, in order of time, a time feature value obtaining unit obtaining predetermined time feature values from each of two contiguous photos among the sorted photos, a content-based feature value extraction unit extracting predetermined content-based feature values from each of the two contiguous photos, a dissimilarity measuring unit measuring dissimilarity between the two photos by making predetermined time feature value importances reflect respective time feature values, and by making predetermined content-based feature value importances reflect respective content-based feature values, and a situation change detection unit detecting a situation change by determining the situation change if an amount of the dissimilarity is equal to or greater than a predetermined threshold.

A predetermined content-based feature value may be generated based on pixel information of a photo, and include a visual descriptor including color, texture, and shape feature values, and an audio descriptor including a voice feature value.

A time feature value importance and a content-based feature value importance may be determined by referring to situation-based clustering hints including at least one of entire brightness information of a photo (Brightness), complexity information of the photo (Level of detail), homogeneous texture information of the photo (Homogeneous texture), edge information of the photo (Heterogeneous texture), information on whether the photo is monochrome (Monochromatic), information indicating a degree of colorfulness of a color expression of the photo (colorfulness), information indicating an entire color coherence shown in the photo (color coherence), information indicating a color temperature of a color of the photo (color temperature), information indicating whether a photo file of the photo includes taken time information (Taken time), information indicating that, if the photo and another photo are taken by different cameras in similar time bands and are clustered together, time information of the photo overlaps time information of the other photo and an importance of corresponding time information is lowered when the photo is situation-based clustered (Time overlap), information indicating whether voice information of a user is stored together with the photo when the photo was taken and is included with the photo as an audio clip file (Audio clip), and information indicating voice words and sentence strings recognized in an audio file of the photo (Speech recognition).

According to a second aspect of the invention, there is provided an apparatus for situation-based clustering of a digital photo album, including a photo description information generation unit generating photo description information describing a photo and including at least a photo identifier, an albuming tool description information generation unit generating albuming tool description information including a predetermined parameter for situation-based clustering of digital photos, an albuming tool performing photo albuming through situation-based clustering by using at least the photo description information and the albuming tool description information, a photo group information generation unit generating predetermined photo group description information from an output of the albuming tool, and a photo albuming information generation unit generating predetermined photo albuming information by using the photo description information and the predetermined photo group description information for situation-based clustering of the digital photo album.

Among the photo identifier, information on an author of the photo, photo file information, camera information, photographing information, and a content-based feature value, the photo description information may include at least the photo identifier, with the content-based feature value being generated by using pixel information of the photo, and includes a visual descriptor including color, texture, and shape feature values, and/or an audio descriptor including a voice feature value.

The albuming tool description information generation unit may include at least one of a sort key generation unit generating items for sorting photos before clustering the photos, a situation-based clustering hint generation unit generating a situation-based clustering hint to help photo clustering, and an importance generation unit generating importances of information to be used in photo clustering.

The photo sort items of the sort key generation unit may include at least one of a file name, a photographing time, and a photo file creation time. In addition, the photographing time may include photographing date information and the photo file creation time includes photo file creation date information.

The situation-based clustering hint of the situation-based clustering hint unit may include at least one of entire brightness information of the photo (Brightness), complexity information of the photo (Level of detail), homogeneous texture information of the photo (Homogeneous texture), edge information of the photo (Heterogeneous texture), information on whether the photo is monochrome (Monochromatic), information indicating a degree of colorfulness of a color expression of the photo (colorfulness), information indicating an entire color coherence shown in the photo (color coherence), information indicating a color temperature of a color of the photo (color temperature), information indicating whether a photo file of the photo includes taken time information (Taken time), information indicating that, if the photo and another photo are taken by different cameras in similar time bands and are clustered together, time information of the photo overlaps time information of the other photo and an importances of corresponding time information is lowered when the photo is situation-based clustered (Time overlap), information indicating whether voice information of a user is stored together with the photo when the photo was taken and is included with the photo as an audio clip file (Audio clip), and information indicating voice words and sentence strings recognized in an audio file of the photo (Speech recognition).

In addition, the importances of the importance generation unit may be based on at least one of information (taken time) setting an importance of time information on a time when the photo is taken, and information (low-level feature) setting an importance of content-based feature value information of the photo.

The information (low-level feature) setting the importance of content-based feature value information of the photo may include information setting an importance of a moving picture experts group (MPEG)-7 Visual Descriptor, and information setting an importance of a MPEG-7 Audio Descriptor.

The albuming tool may include a situation-based photo clustering tool clustering digital photo data based on situations. Further, the situation-based photo clustering tool may includes, a photo sort unit sorting photos, desired to be situation-based clustered, in order of time, a time feature value obtaining unit obtaining, from the photo description information generation unit, time feature values from each of two contiguous photos among the sorted photos, a content-based feature value extraction unit extracting, from the photo description information generation unit, content-based feature values from each of the two contiguous photos, a dissimilarity measuring unit measuring dissimilarity between the two photos by making time feature value importances, obtained from the albuming tool description information generation unit, reflect respective time feature values obtained from the time feature value obtaining unit, and by making predetermined content-based feature value importances, obtained from the albuming tool description information generation unit, reflect respective content-based feature values extracted in the content-based feature value extraction unit, and a situation change detection unit detecting a situation change by determining the situation change based on an amount of the dissimilarity value.

The respective time feature value importances and the respective predetermined content-based feature value importances may be determined by referring to situation-based clustering hints of the albuming tool description information generation unit.

In addition, the photo group description information of the photo group information generation unit may include at least one of situation-based photo groups by clustering situation-based photos, and a situation-based photo group includes a situation identifier identifying a situation, a series of photos formed with a plurality of photos determined by photo identifiers, and a photo key identifier allowing identifying of one or more representative photos among photos in a photo group.

According to a third aspect of the invention, there is provided a method for detecting a situation change in digital photos, including sorting photos, desired to be situation-based clustered, in order of time, obtaining respective time feature values and respective predetermined content-based feature values from each of two contiguous photos among the sorted photos, measuring a dissimilarity between the two photos by making predetermined time feature value importances reflect respective time feature values, and by making predetermined content-based feature value importances reflect respective content-based feature values, and detecting a situation change by determining the situation change if an amount of the dissimilarity is equal to or greater than a predetermined threshold.

The detecting of the situation change may include determining the situation change if an amount of change, between a dissimilarity between one of the contiguous photos and a previous photo, not same as another one of the contiguous photos, and a dissimilarity between the other one of the contiguous photos and a subsequent photo, is greater than a threshold.

A predetermined content-based feature value can be generated by using pixel information of respective photos, and include a visual descriptor including color, texture, and shape feature values, and/or an audio descriptor including a voice feature value.

In addition, time feature value importance and a content-based feature value importance can be determined by referring to a situation-based clustering hint including at least one of entire brightness information of a photo (Brightness), a complexity information of the photo (Level of detail), homogeneous texture information of the photo (Homogeneous texture), edge information of the photo (Heterogeneous texture), information on whether the photo is monochrome (Monochromatic), information indicating a degree of colorfulness of a color expression of the photo (colorfulness), information indicating entire color coherence shown in the photo (color coherence), information indicating a color temperature of a color of the photo (color temperature), information indicating whether a photo file of the photo includes taken time information (Taken time), information indicating that, if the photo and another photo taken by different cameras in similar time bands and are clustered together, time information of the photo overlaps time information of the other photo and an importance of corresponding time information is lowered when the photo is situation-based clustered (Time overlap), information indicating whether voice information of a user is stored together with the photo when the photo was taken and is included as an audio clip file (Audio clip), and information indicating voice words and sentence strings recognized in an audio file of the photo (Speech recognition).

According to a fourth aspect of the invention, there is provided a method for situation-based clustering of a digital photo album, including generating photo description information by extracting at least one of camera information on a camera taking a photo, photographing information of the photo, and a content-based feature value of the photo, generating albuming tool description information including a predetermined parameter for situation-based clustering of digital photos, performing photo albuming through situation-based clustering by using at least the photo description information and the albuming tool description information, generating photo group description information by using a result of the situation-based clustering, and generating predetermined photo albuming information by using the photo description information and the photo group description information to situation-based cluster the digital photo album.

In the generating of the photo description information, among the photo identifier, information on an author of the photo, photo file information, camera information, photographing information, and content-based feature values, the photo description information may include at least the photo identifier, with the content-based feature value being generated by using pixel information of the photo, and include a visual descriptor including color, texture, and shape feature values, and/or an audio descriptor including a voice feature value. In addition, in the generating of the albuming tool description information, the albuming tool description information generation may include at least one of sort key sorting photos before clustering of the photos, situation-based clustering hint generating a situation-based clustering hint to help photo clustering, and importance generating importances of information to be used in photo clustering. A sort key in the sort key sorting includes at least one of a file name, a photographing time, and a photo file creation time.

The situation-based clustering hint may include at least one of entire brightness information of the photo (Brightness), complexity information of the photo (Level of detail), homogeneous texture information of the photo (Homogeneous texture), edge information of the photo (Heterogeneous texture), information on whether the photo is monochrome (Monochromatic), information indicating a degree of colorfulness of a color expression of the photo (colorfulness), information indicating an entire color coherence shown in the photo (color coherence), information indicating a color temperature of a color of the photo (color temperature), information indicating whether a photo file of the photo includes taken time information (Taken time), information indicating that, if the photo and another photo taken by different cameras in similar time bands and are clustered together, time information of the photo overlaps time information of the other photo and an importance of corresponding time information is lowered when the photo is situation-based clustered (Time overlap), information indicating whether voice information of a user stored together with the photo when the photo was taken and is included with the photo as an audio clip file (Audio clip), and information indicating voice words and sentence strings recognized in an audio file of the photo (Speech recognition).

The importances may be based on at least one of information (taken time) setting an importance of time information on a time when the photo is taken, and information (low-level feature) setting an importance of content-based feature value information of the photo. Further, the information (low-level feature) setting the importance of content-based feature value information of the photo may include information setting an importance of a MPEG-7 Visual Descriptor, and information setting an importance of a MPEG-7 Audio Descriptor.

The performing of the photo albuming may include sorting photos, desired to be situation-based clustered, in order of time, obtaining time feature values and predetermined content-based feature values from each of two contiguous photos among the sorted photos, measuring a dissimilarity between the two photos by making predetermined time feature value importances reflect respective time feature values, and by making predetermined content-based feature value importances reflect respective content-based feature values, and detecting a situation change by determining the situation change based on an amount of the dissimilarity value. The time feature value importances and the content-based feature value importances may be determined by referring to situation-based clustering hints.

The generating of the predetermined photo albuming information, the photo group description information may include at least one of situation-based photo groups by clustering situation-based photos, and with the situation-based photo group including a situation identifier identifying a situation, a series of photos formed with a plurality of photos determined by photo identifiers, and a photo key identifier allowing identifying of one or more representative photos among the photos in a photo group.

To achieve the above and/or other aspects and advantages, embodiments of the present invention may implemented through computer readable instructions on a medium.

Embodiments of the present invention thus provide a method, medium, and apparatus for detecting a situation change in a digital photo in order to cluster photos based on situations of photographing by using basic photo information stored in a photo file, taken by using a digital photographing apparatus for example, e.g., a digital camera, and a variety of content-based feature value information items extracted from the contents of the photos.

Embodiments of the present invention thus also provide a method, medium, and apparatus for situation-based clustering in a digital photo album in order to construct an album with photos, taken by a digital photographing apparatus for example, by clustering photos based on situations of photographing by using a digital photo situation change detecting method, medium, and apparatus, so that users may easily store photo groups in an album and share the grouped photos with other users.

Additional aspects and/or advantages of the invention will be set forth in part in the description which follows and, in part, will be apparent from the description, or may be learned by practice of the invention.

BRIEF DESCRIPTION OF THE DRAWINGS

The above and other features and advantages of the present invention will become more apparent by describing in detail exemplary embodiments thereof with reference to the attached drawings in which:

FIG. 1 is a block diagram of an apparatus for situation-based clustering in a digital photo album, according to an embodiment of the present invention;
FIG. 2 is a detailed block diagram of an albuming tool description information generation unit, according to an embodiment of the present invention;
FIG. 3 is a block diagram of a situation-based clustering tool, according to and embodiment of the present invention;
FIG. 4 illustrates photo description information generated in a photo description information generation unit, according to an embodiment of the present invention;
FIG. 5 is a block diagram illustrating a description structure of parameters used for effective photo clustering in a process of performing situation-based clustering of photos using photo description information, according to an embodiment of the present invention;
FIG. 6 is a block diagram illustrating a description structure of photo group information after clustering of photos, according to an embodiment of the present invention;
FIG. 7 is a block diagram illustrating a photo information description structure, according to an embodiment of the present invention expressed in an XML schema;
FIG. 8 is a block diagram illustrating a parameter description structure for photo albuming, according to an embodiment of the present invention expressed in an XML schema;
FIG. 9 is a block diagram illustrating a photo group description structure, according to an embodiment of the present invention expressed in an XML schema;
FIG. 10 is a block diagram illustrating an entire description structure for digital photo albuming, according to an embodiment of the present invention expressed in an XML schema;
FIG. 11 is a flowchart of a method for situation-based clustering of digital photos, according to an embodiment of the present invention;
FIG. 12 is a detailed flowchart for operation 1110 of FIG. 11, according to an embodiment of the present invention;
FIG. 13 is a detailed flowchart for operation 1130 of FIG. 11, according to an embodiment of the present invention;
FIG. 14 illustrates and embodiment of the present invention implementing operation 1130 of FIG. 11;
FIG. 15A illustrates a pattern of dissimilarity difference values in a case of a situation cluster formed with one or more photos; and
FIG. 15B illustrates a pattern of dissimilarity difference values in a case of a situation cluster formed with one photo.

DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

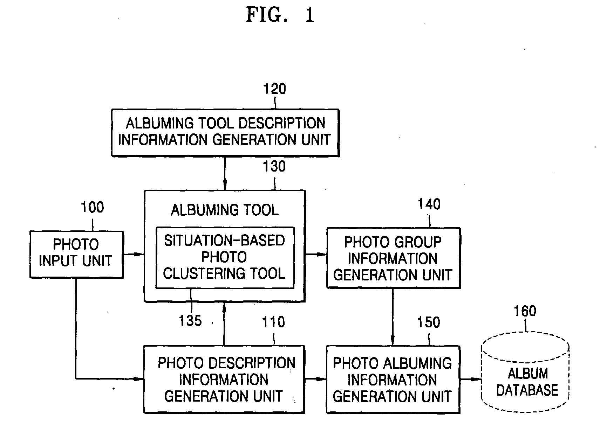

Referring to FIG. 1, an apparatus for situation-based clustering in a digital photo album, according to an embodiment of the present invention, includes a photo description information generation unit 110, an albuming tool description information generation unit 120, an albuming tool 130, a photo group information generation unit 140, and a photo albuming information generation unit 150. The apparatus may further include a photo input unit 100.

The photo input unit 100 can receive an input of a series of photos from an internal memory apparatus of a digital camera or a portable memory apparatus, for example.

The photo description information generation unit 110 generates photo description information describing a photo and including at least a photo descriptor.

More specifically, the photo description information generation unit 110 confirms from each of input photos whether or not there is camera information and photographing information stored in the respective photo files, and if the information items are in any of the photo files, the information items are extracted and expressed according to a photo description structure. At the same time, content-based feature values are extracted from pixel information of photos and expressed according to the photo description structure. The photo description information is then input to the photo albuming tool 130 for grouping photos.

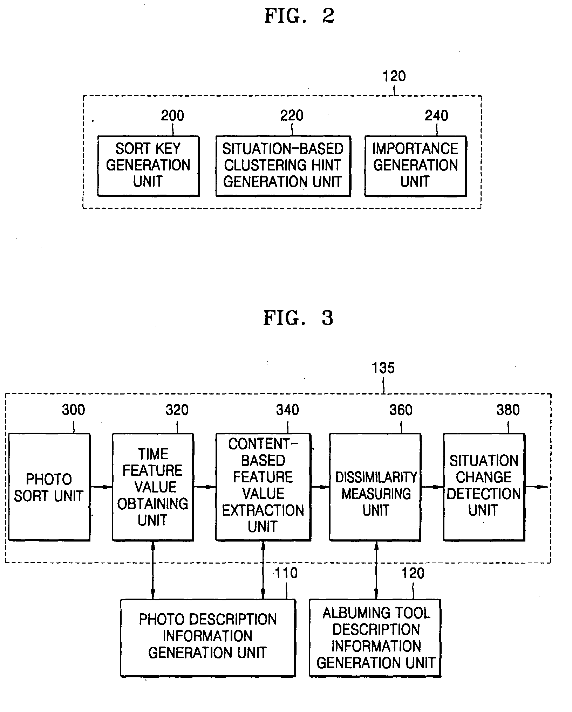

In order to more efficiently retrieve and group photos by using the variety of generated photo description information items, the albuming tool description information generation unit 120 generates albuming tool description information including predetermined parameters for situation-based photo clustering. FIG. 2 is a detailed block diagram of a albuming tool description information generation unit 120, according to an embodiment of the present invention, which includes at least one of a sort key generation unit 200, a situation-based clustering hint generation unit 220, and an importance generation unit 240.

The sort key generation unit 200 generates an item for sorting photos before the photos are clustered, and preferably, the photo sort items include at least one of a file name, a photographing date and/or time, and a photo file generation date and/or time. The situation-based clustering hint generation unit 220 generates a situation-based clustering hint to help photo clustering. The importance generation unit 240 generates the importance of information to be used for photo clustering.

The albuming tool 130 performs photo albuming through situation-based photo clustering by using at least the photo description information and the albuming tool description information, and includes a situation-based clustering tool 135. The situation-based clustering tool 135, an apparatus for detecting a situation change in a digital photo, determines and detects a situation change in a digital photo.

The situation-based clustering tool 135 clusters digital photo data based on situations, and may include a photo sort unit 300, a time feature value obtaining unit 320 (where the time feature can be based on time information and/or date information), a content-based feature value extraction unit 340, a dissimilarity measuring unit 360, and a situation change detection unit 380, as shown in FIG. 3.

The photo sort unit 300 sorts photos desired to be situation-based clustered, in order of taken time (with "time" being representative of time and/or date). The time feature value obtaining unit 320 obtains, from the photo description information generation unit 110, a time feature value for each of two contiguous photos among photos sorted in order of taken time. The content-based feature value extraction unit 340 extracts from the photo description information generation unit 110 a content-based feature value for each of the two contiguous photos. The dissimilarity measuring unit 360 measures the dissimilarity of the two photos by making the time feature value importance, obtained from the albuming tool description information generation unit 120, reflect the time feature value obtained from the time feature value obtaining unit 320, and by making the content-based feature value importance, obtained from the albuming tool description information generation unit 120, reflect the content-based feature value extracted from the content-based feature value extraction unit 340. The situation change detection unit 380 determines and detects a situation change by using the amount of change in the dissimilarity value.

The photo group information generation unit 140 generates predetermined photo group description information from the output of the albuming tool 130. The photo albuming information generation unit 150 generates predetermined photo albuming information by using the photo description information and the photo group description information.

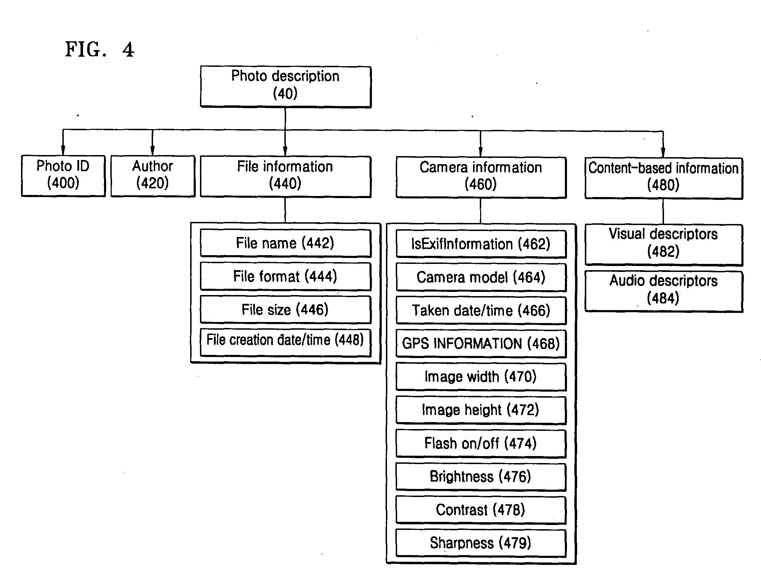

FIG. 4 illustrates a structure of photo description information generated in the photo description information generation unit 110, according to an embodiment of the present invention. From photos input from an internal memory apparatus of a digital camera or a portable memory apparatus, the photo description information can express camera information and photographing information stored in a file and content-based feature value information extracted from the contents of photos. As shown in FIG. 4, the photo information description information 40 may include a photo identifier (Photo ID) 400 identifying each photo, an item (Author) 420 expressing an author of the photo, an item (File information) 440 expressing file information stored in the photo file, an item (Camera information) 460 expressing camera information stored in the photo file, and an item (Content-based information) 480 expressing a content-based feature value.

As detailed items to express the file information 440 stored in a photo file, the photo file information 440 may also include an item (File name) 442 expressing the name of the photo file, an item (File format) 444 expressing the format of the photo file, an item (File size) 446 expressing the capacity of the photo file in units of bytes, and an item (File creation date/time) 448 expressing the date and/or time (i.e., time information) when the photo file was created.

As detailed items to express the camera and photographing information 460 stored in a photo file, the camera and photographing information 460 may also include an item (IsExifInformation) 462 expressing whether or not a photo file includes Exif information, an item (Camera model) 464 expressing a camera model taking the photo, an item (Taken date/time) 466 expressing the date and/or time when the photo was taken, an item (GPS information) 468 expressing the location where the photo was taken, an item (Image width) 470 expressing the width information of the photo, an item (Image height) 472 expressing the height information of the photo, an item (Flash on/off) 474 expressing whether or not a camera flash is used to take the photo, an item (Brightness) 476 expressing the brightness information of the photo, an item (Contrast) 478 expressing the contrast information of the photo, and an item (Sharpness) 479 expressing the sharpness information of the photo.

Also, the information 480 expressing a content-based feature value extracted from a photo may include an item (Visual descriptor) 482 expressing feature values of color, texture, and shape extracted by using an MPEG-7 Visual Descriptor, and an item (Audio descriptor) 484 expressing a feature value of voice extracted by using the MPEG-7 Audio Descriptor.

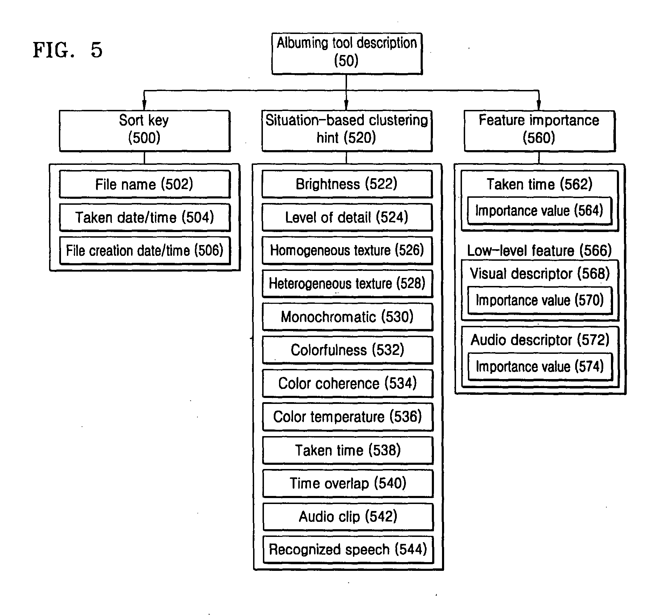

FIG. 5 is a block diagram showing a description structure to express parameters used for effective photo clustering in a process of performing situation-based clustering of photos, using the photo description information 40 described above with reference to FIG. 4. Since it is difficult to achieve a satisfiable clustering performance only with time information and a single content-based feature value, time information and multiple content-based feature value information items may together be used in embodiments of the present invention.

In addition, in order to achieve a higher situation-based clustering performance, situation-based clustering hint information is defined, and according to the hint of each photo, the importance of feature information to be used in photo clustering can be adaptively set. As shown in FIG. 5, as parameters 50 for effective photo clustering, included are an item (Sort key) 500 sorting photos before clustering of photos, an item (Situation-based clustering hint) 520 expressing a situation-based clustering hint kept by the photo, and an item (Feature importance) 560 expressing the importance of information to be used in photo clustering, for example.

The item 500 sorting photos may include an item (File name) 502 sorting photos in order of name, an item (Taken date/time) 504 sorting photos in order of their respective taken date and/or time, an item (File creation date/time) 506 sorting photos in order of taken date and/or time.

Detailed items of the clustering hint item 520 expressing semantic information of a higher level concept of a photo may include an item (Brightness) 522 indicating information on the entire brightness of a photo, an item (Level of detail) 524 indicating the degree of complexity of the photo, an item (Homogeneous texture) 526 indicating information on homogeneous texture of the photo, an item (Heterogeneous texture) 528 indicating information on an edge of a photo, an item (Monochromic) 530 indicating whether or not the photo is monochrome, an item (Colorfulness) 532 indicating the degree of colorfulness of the color expression of the photo, an item (Color coherence) 534 indicating the entire color coherence shown in the photo, an item (Color temperature) 536 indicating the color temperature of the color of the photo, an item (Taken time) 538 indicating whether or not the photo file includes taken time information, an item (Time overlap) 540 indicating that, if photos taken by many cameras in similar time bands are clustered at the same time, the time information of a current photo overlaps the time information of photos taken by other cameras and that the importance of time information is lowered when the current photo is situation-based clustered, an item (Audio clip) 542 indicating whether or not voice information of a user is stored together with the photo when the photo is taken, e.g., included as an audio clip file, and an item (Recognized speech) 544 indicating voice words and sentence strings recognized in an audio file of the photo.

The value of the item (Brightness) 522 indicating the brightness of the entire photo can be measured by averaging the pixel intensity extracted from each pixel of a photo, and the value of the item (Level of detail) 524 indicating the degree of complexity of the photo can be estimated from an entropy measured from the pixel information of the photo or 'an isopreference curve' determining the actual complexity of each photo. The value of the item (Homogeneous texture) 526 indicating information on homogeneous texture of the photo can be measured by using regularity, direction, and scale of the texture from the feature value of Texture Browsing descriptor among MPEG-7 visual descriptors. The value of the item (Heterogeneous texture) 528 indicating information on an edge of a photo can be measured by extracting edge information from a photo and normalizing the intensity of the extracted edge. The value of the item (Monochromic) 530 having no color information, and indicating whether or not the photo is monochrome can be determined by the number of bits allocated to each pixel of the photo. The value of the item (Colorfulness) 532 indicating the degree of colorfulness of the color expression of the photo can be measured by normalizing the height of the histogram of each color value from a color histogram and the distribution value of the entire color value. The value of the item (Color coherence) 534 indicating the entire color coherence shown in the photo can be measured by using a Dominant Color descriptor among MPEG-7 visual descriptors, and can be measured by normalizing the height of the histogram of each color value from a color histogram and the distribution value of the entire color value. The value of the item (Color temperature) 536 indicating the color temperature of the color of the photo can be measured by normalizing a color temperature value measured by using a Color Temperature descriptor among MPEG-7 visual descriptors. The item (Taken time) 538 indicating whether or not the photo file includes taken time information can be extracted from Exif information of the photo file. As for the item (Time overlap) 540 indicating that, if photos taken by many cameras in similar time bands are clustered at the same time, the time information of a current photo overlaps the time information of photos taken by other cameras and the importance of time information being lowered when the current photo is situation-based clustered, information on whether or not times of camera photos are overlapping can be obtained by placing a sliding window with an arbitrary length centered at the current photo and comparing camera model information of photos belonging to the window. The item (Audio clip) 542, indicating whether or not voice information of a user stored together with a photo when the photo is taken is included as an audio clip file, can be obtained by examining whether or not there is a file having the same file name as that of the photo and a different extension indicating a voice file such as wav, and mp2/3, etc.. As for the item (Recognized speech) 544 indicating voice words and sentence strings recognized in an audio file of a photo, a recognized voice can be obtained by using methods such as hidden Markov model (HMM), neural network, dynamic time warping (DTW) for a voice feature value extracted by using LPC cepstrum, PLP cepstrum, filter bank energy, mel frequency Cepstral coefficient (MFCC) and so on. Though this method is a preferred embodiment of a method for obtaining hint information, other methods can also be used.

Detailed items of the item 560 expressing the importance of information to be used in photo clustering include an item (Taken time) 562 setting the importance of taken time information and an item (Low-level feature) 566 setting the importance of information on a content-based feature value of a photo.

The item (Taken time) 562 setting the importance of taken time information includes an item (Importance value) 564 expressing a corresponding importance value. The item (Low-level feature) 566 setting the importance of information on a content-based feature value of a photo includes an item (Visual descriptor) 568 setting the importance of MPEG-7 Visual Descriptor and an item (Importance value) 570 expressing a corresponding importance value, and an item (Audio descriptor) 572 setting the importance of MPEG-7 Audio Descriptor and an item (Importance value) 574 expressing a corresponding importance value. The importance value can have a value in a range from 0.0 to 1.0, for example.

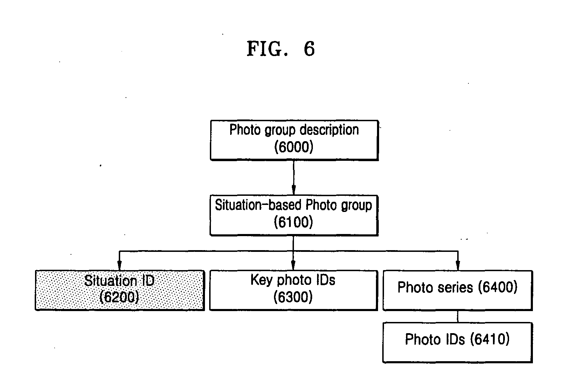

FIG. 6 is a block diagram showing a description structure 6000 to express photo group information after clustering of photos. The photo group may include a photo group 6100 by the situation-based photo clustering, and each photo group may include sub groups (Photo series) 6400 according to a plurality of situations. Each situation group can include a plurality of photos as a photo identifier (Photo ID) 6410.

Also, each situation group may have a situation identifier (Situation ID) 6200. One or more representative photos (Key photo ID) 6300 among photos in the group can be set by the photo identifier.

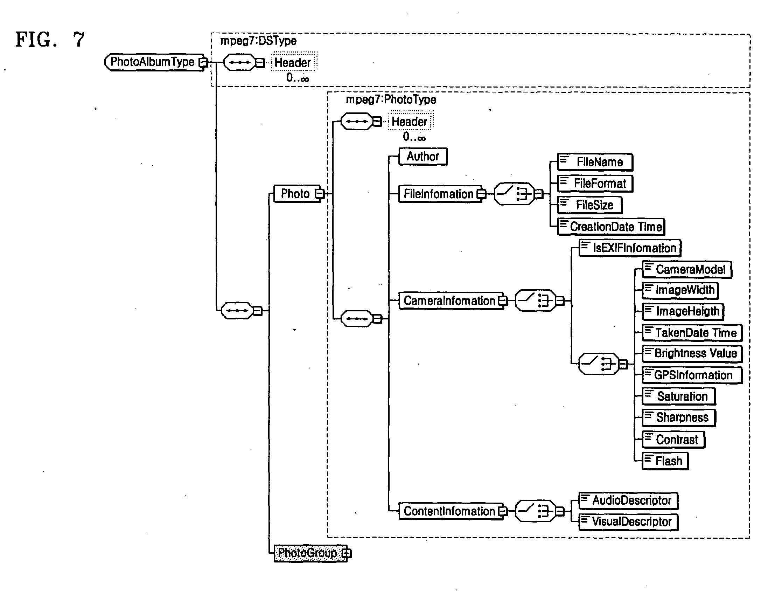

FIG. 7 is a block diagram showing a photo information description structure, according to an embodiment of the present invention expressed in an XML schema. The description structure expressing camera information and photographing information stored in a photo file and content-based feature value information extracted from the content of a photo can be expressed in an XML format as the following, as an example.

```
<complexType name="PhotoType">
 <complexContent>
   <extension base="mpeg7:DSType">
    <sequence>
       <element name="Author" type="mpeg7:TextualType"/>
       <element name="FileInfomation">
        <complexType>
          <complexContent>
           <extension base="mpeg7:DType">
             <choice>
               <element name="FileName" type="mpeg7:TextualType"/>
               <element                          name="FileFormat"
type="mpeg7:TextualType"/>
                         <element                name="FileSize"
type="nonNegativeInteger"/>
                    <element                 name="CreationDateTime"
type="mpeg7:timePointType"/>
               </choice>
```

```
                        </extension>
                    </complexContent>
                </complexType>
            </element>
        <element name="CameraInfomation">
            <complexType>
                <choice>
                    <element                    name="IsEXIFInfomation"
type="boolean"/>
                    <choice>
                        <element    name="CameraModel"    type=
"mpeg7:TextualType"/>
                        <element    name="ImageWidth"    type=
"nonNegativeInteger"/>
                        <element    name="ImageHeight"    type=
"nonNegativeInteger"/>
                        <element    name="TakenDateTime"    type=
"mpeg7:timePointType"/>
                        <element         name="BrightnessValue"
type="integer"/>
                        <element    name="GPSInfomation"    type=
"nonNegativeInteger"/>
                        <element name="Saturation" type="integer"/>
                        <element name="Sharpness" type="integer"/>
                        <element name="Contrast" type="integer"/>
                        <element name="Flash" type="boolean"/>
                    </choice>
                </choice>
            </complexType>
        </element>
        <element name="ContentInfomation">
            <complexType>
                <complexContent>
```

```
                    <extension base="mpeg7:DType">
                        <choice>
                            <element   name="VisualDescriptor"   type=
"mpeg7:VisualDType"/>
                            <element   name="AudioDescriptor"   type=
"mpeg7:AudioDType"/>
                        </choice>
                    </extension>
                </complexContent>
            </complexType>
        </element>
    </sequence>
    <attribute name="PhotoID" type="ID" use="required"/>
    </extension>
    </complexContent>
</complexType>
```

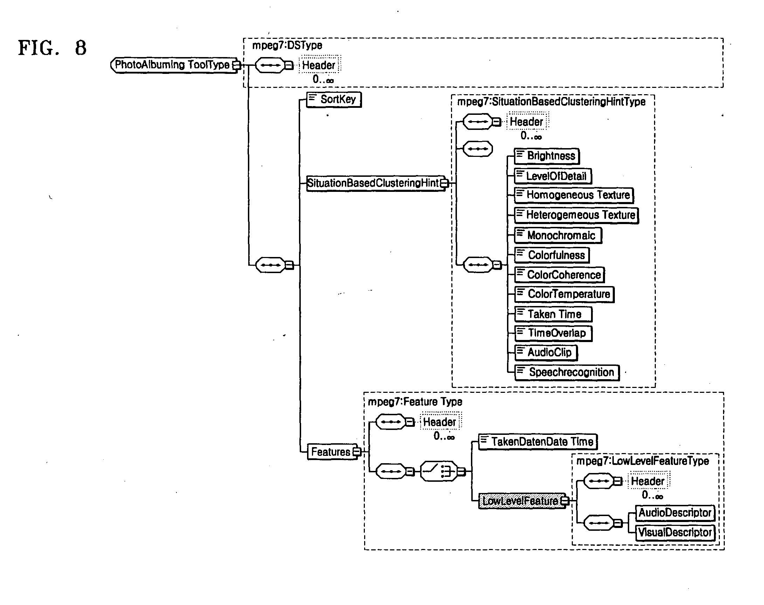

FIG. 8 is a block diagram showing a parameter description structure for photo albuming, according to an embodiment of, the present invention expressed in an XML schema.

The description structure expressing parameters required for effective photo clustering can be expressed in an XML format as the following, as an example.

```
<complexType name="PhotoAlbumingToolType">
    <complexContent>
        <extension base="mpeg7:DSType">
            <sequence>
                <element name="SortKey" type="mpeg7:PhotoSortType"/>
                <element      name="SituationBasedClusteringHint"      type=
"mpeg7:SituationBasedClusteringHintType"/>
                <element name="Features" type="mpeg7:FeatureType"/>
            </sequence>
        </extension>
```

```
            </complexContent>
        </complexType>
        <complexType name="SituationBasedClusteringHintType">
            <complexContent>
                <extension base="mpeg7:PhotoAlbumingToolType">
                    <sequence>
                        <element name="Brightness" type="mpeg7:zeroToOneType"/>
                        <element                       name="LevelOfDetail"
type="mpeg7:zeroToOneType"/>
                        <element name="HomogeneousTexture" type="boolean"/>
                        <element name="HeterogemeousTexture" type="boolean"/>
                        <element name="Monochromaic" type="boolean"/>
                        <element                        name="Colorfulness"
type="mpeg7:zeroToOneType"/>
                        <element                      name="ColorCoherence"
type="mpeg7:zeroToOneType"/>
                        <element        name="ColorTemperature"        type=
"mpeg7:zeroToOneType"/>
                        <element name="TakenTime" type="boolean"/>
                        <element name="TimeOverlap" type="boolean"/>
                        <element name="AudioClip" type="boolean"/>
                        <element                   name="SpeechRecognition"
type="mpeg7:TextualType"/>
                    </sequence>
                </extension>
            </complexContent>
        </complexType>
        <complexType name="FeatureType">
            <complexContent>
                <extension base="mpeg7:DSType">
                    <sequence>
                        <choice>
                            <element        name="TakenDateTime"        type=
```

```
"mpeg7:timePointType"/>
                    <element          name="LowLevelFeature"          type=
"mpeg7:LowLevelFeatureType"/>
                    </choice>
                </sequence>
                <attribute name="ImportanceValue" type="mpeg7:zeroToOneType"
use= "optional"/>
            </extension>
        </complexContent>
    </complexType>
    <complexType name="LowLevelFeatureType">
        <complexContent>
            <extension base="mpeg7:DSType">
                <sequence>
                    <element                          name="AudioDescriptor"
type="mpeg7:AudioDType"/>
                    <element                          name="VisualDescriptor"
type="mpeg7:VisualDType"/>
                </sequence>
            </extension>
        </complexContent>
    </complexType><complexType name="PhotoAlbumingToolType">
        <complexContent>
            <extension base="mpeg7:DSType">
                <sequence>
                    <element name="SortKey" type="mpeg7:PhotoSortType"/>
                    <element      name="SituationBasedClusteringHint"      type=
"mpeg7:SituationBasedClusteringHintType"/>
                    <element name="Features" type="mpeg7:FeatureType"/>
                </sequence>
            </extension>
        </complexContent>
    </complexType>
```

```
<complexType name="SituationBasedClusteringHintType">
    <complexContent>
        <extension base="mpeg7:PhotoAlbumingToolType">
            <sequence>
                <element name="Brightness" type="mpeg7:zeroToOneType"/>
                <element name="LevelOfDetail" type="mpeg7:zeroToOneType"/>
                <element name="HomogeneousTexture" ="mpeg7:zeroToOneType"/>
                <element name="HeterogeneousTexture" ="mpeg7:zeroToOneType"/>
                <element name="Monochromaic" type="boolean"/>
                <element name="Colorfulness" type="mpeg7:zeroToOneType"/>
                <element name="ColorCoherence" type="mpeg7:zeroToOneType"/>
                <element name="ColorTemperature" type="mpeg7:zeroToOneType"/>
            </sequence>
        </extension>
    </complexContent>
    <complexType name="PhotoSortType">
        <simpleContent>
            <restriction base="NMTOKEN">
                <enumeration value="FileName"/>
                <enumeration value="TakenDateTime"/>
                <enumeration value="CreationDateTime"/>
            </restriction>
        </simpleContent>
    </complexType>
    <complexType name="FeatureType">
        <complexContent>
            <extension base="mpeg7:DSType">
```

```
            <sequence>
                <choice>
                    <element          name="TakenDateTime"        type=
"mpeg7:timePointType"/>
                    <element          name="LowLevelFeature"        type=
"mpeg7:LowLevelFeatureType"/>
                </choice>
            </sequence>
            <attribute name="ImportanceValue" type="mpeg7:zeroToOneType"
use= "optional"/>
        </extension>
    </complexContent>
</complexType>
<complexType name="LowLevelFeatureType">
    <complexContent>
        <extension base="mpeg7:DSType">
            <sequence>
                <choice>
                    <element name="VisualDescriptor">
                        <simpleType>
                            <restriction base="NMTOKEN">
                                <enumeration value="HomogeneousTexture"/>
                                <enumeration value="ColorStructure"/>
                                <enumeration value="ColorLayout"/>
                                <enumeration value="IlluminationInvariantColor"/>
                            </restriction>
                        </simpleType>
                    </element>
                </choice>
            </sequence>
        </extension>
    </complexContent>
</complexType>
```

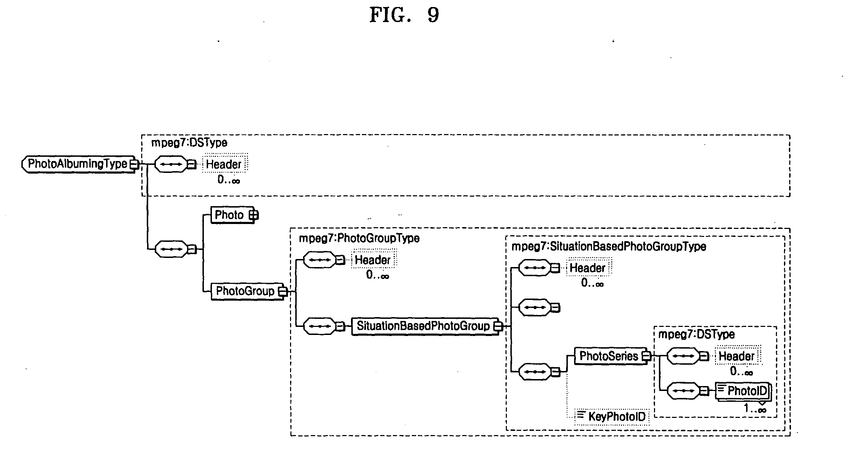

FIG. 9 is a block diagram showing a photo group description structure, according to an embodiment of the present invention expressed in an XML schema. The description structure expressing photo group information after photo clustering can be expressed in an XML format as the following, as an example.

```
<complexType name="PhotoGroupType">
    <complexContent>
        <extension base="mpeg7:DSType">
            <sequence>
                <element    name="SituationBasedPhotoGroup"    type=
"mpeg7:SituationBasedPhotoGroupType"/>
            </sequence>
        </extension>
    </complexContent>
</complexType>
<complexType name="SituationBasedPhotoGroupType">
    <complexContent>
        <extension base="mpeg7:PhotoGroupType">
            <sequence>
                <element name="PhotoSeries">
                    <complexType>
                        <complexContent>
                            <extension base="mpeg7:DSType">
                                <sequence>
                                    <element  name="PhotoID"  type="IDREF"
maxOccurs="unbounded"/>
                                </sequence>
                            </extension>
                        </complexContent>
                    </complexType>
                </element>
                <element name="KeyPhotoID" type="IDREF" minOccurs="0"/>
```

```
            </sequence>
            <attribute name="SituationID" type="IDREF" use="required"/>
        </extension>
    </complexContent>
</complexType>
```

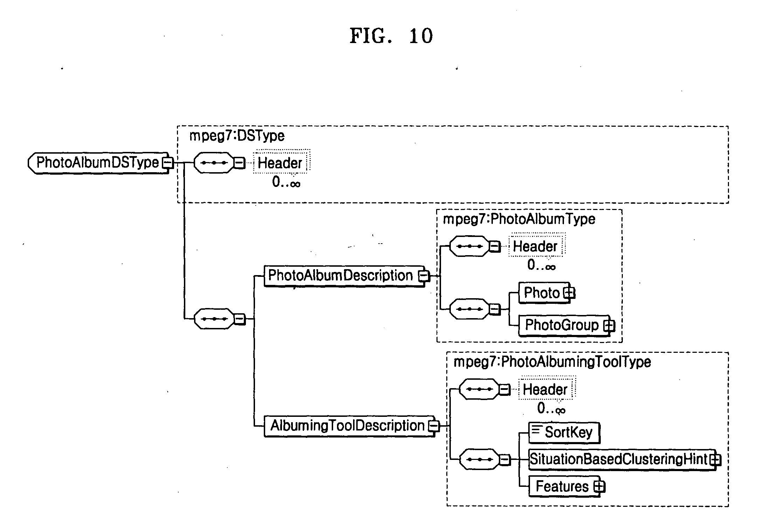

FIG. 10 is a block diagram showing an entire description structure for digital photo albuming, according to an embodiment of the present invention expressed in an XML schema. The entire description structure for digital photo albuming can be expressed in an XML format as the following, as an example.

```
<schema                    targetNamespace="urn:mpeg:mpeg7:schema:2001"
xmlns="http://www.w3.org/2001/XMLSchema"
xmlns:mpeg7="urn:mpeg:mpeg7:schema:2001"    elementFormDefault="qualified"
attributeFormDefault="unqualified">
    <annotation>
        <documentation>
        This document contains visual tools defined in ISO/IEC 15938-3
        </documentation>
    </annotation>
    <include schemaLocation="./mds-2001.xsd"/>
    <complexType name="PhotoAlbumDSType">
        <complexContent>
            <extension base="mpeg7:DSType">
                <sequence>
                    <element            name="PhotoAlbumDescription"
type="mpeg7:PhotoAlbumType"/>
                    <element            name="AlbumingToolDescription"
type="mpeg7:PhotoAlbumingToolType"/>
                </sequence>
            </extension>
        </complexContent>
    </complexType>
    <complexType name="PhotoAlbumType">
```

```
<complexContent>
    <extension base="mpeg7:DSType">
        <sequence>
            <element name="Photo" type="mpeg7:PhotoType"/>
            <element          name="PhotoGroup"          type=
"mpeg7:PhotoGroupType"/>
        </sequence>
    </extension>
</complexContent>
</complexType>
</schema>
```

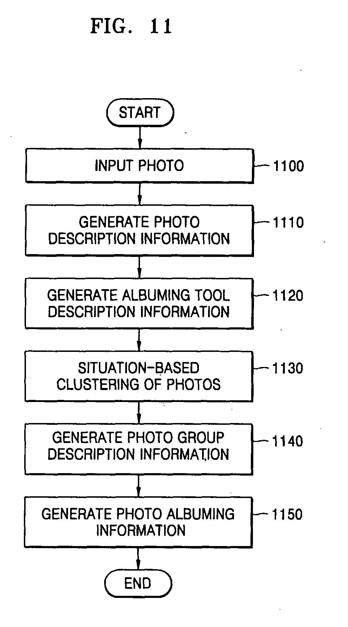

Meanwhile, FIG. 11 is a flowchart of a method for situation-based clustering of digital photos, according to an embodiment of the present invention. Referring to FIG. 11, the operation of an apparatus for situation-based clustering of a digital photo will now also be explained.

An apparatus, medium, and method for situation-based clustering of digital photos can use the description information described above and effectively perform digital photo albuming of digital photo data. Accordingly, first, if a digital photo is input through a photo input unit 100, in operation 1100, photo description information describing the photo and including at least a photo identifier can be generated, in operation 1110.

Also, albuming tool description information including a predetermined parameter for digital photo clustering can be generated, in operation 1120. Then, the photo is situation-based clustered by using the photo description information and the albuming tool description information, in operation 1130. The result of the situation-based clustering is generated as predetermined photo group description information, in operation 1140. Predetermined photo albuming information is then generated by using the photo description information and the photo group description information, in operation 1150.

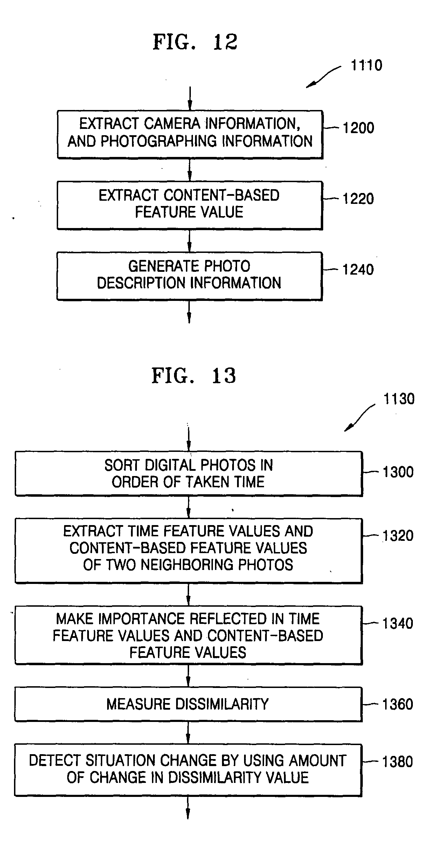

FIG. 12 is a detailed flowchart of operation 1110 of FIG. 11, according to an embodiment of the present invention. Referring to FIG. 12, the generation of the photo description information will now be explained. Camera information on a camera taking the photo and photographing information on the photographing of the photo are extracted from a photo file, in operation 1200. A predetermined content-based feature value is then extracted from the pixel information of the photo, in operation 1220. By using the extracted camera information, photographing information and content-based feature value, predetermined photo description information can be generated, in operation 1240. The content-based feature value can include a visual descriptor containing color, texture, and shape feature values, and an audio descriptor containing a voice feature value, for example. Among a photo identifier, author information on an author taking the photo, photo file information, the camera information, the photographing information, and the content-based feature value, the photo description information may include at least the photo identifier.

Preferably, the albuming tool description information, in operation 1120, includes at least one of a sort key sorting photos before clustering digital photos, a situation-based clustering hint generating a situation-based clustering hint to help clustering, and an importance generating the importance of information to be used in photo clustering, as shown in FIG. 5, for example, though embodiments of the present invention are not limited to the same. The sort key may include at least one of a file name, a photographing data and time, and a photo file creation date and time. The situation-based clustering hint may include at least one of the entire brightness information of a photo (Brightness), the complexity information of the photo (Level of detail), homogeneous texture information of the photo (Homogeneous texture), edge information of the photo (Heterogeneous texture), information on whether or not the photo is monochrome (Monochromatic), information indicating the degree of colorfulness of the color expression of the photo (colorfulness), information indicating the entire color coherence shown in the photo (color coherence), information indicating the color temperature of the color of the photo (color temperature), information indicating whether or not the photo file includes taken time information (Taken time), information indicating that, if photos taken by many cameras in similar time bands are clustered at the same time, the time information of the current photo overlaps the time information of photos taken by other cameras and the importance of time information is lowered when the current photo is situation-based clustered (Time overlap), information indicating whether or not voice information, of a user stored together with the photo when the photo is taken, is included as an audio clip file (Audio clip), and information indicating voice words and sentence strings recognized in the audio file of a photo (Speech recognition).

The importance includes at least one of information (taken time) setting the importance of taken time information and information (low-level feature) setting the importance of information on a content-based feature value of a photo. The information (low-level feature) setting the importance of information on a content-based feature value of a photo includes information setting the importance of MPEG-7 Visual Descriptor and information setting the importance of an MPEG-7 Audio Descriptor.

FIG. 13 is a detailed flowchart of operation 1130 of FIG. 11, according to an embodiment of the present invention. Referring to FIG. 13, a method for detecting a situation change in a digital photo for situation-based clustering will now be explained. First, photos desired to be situation-based clustered are sorted in order of taken time, in operation 1300. Among the photos sorted in order of taken time, the time feature value and a predetermined content-based feature value are obtained from each of two contiguous photos, in operation 1320. In each of the two contiguous photos, a predetermined time feature value importance is made to reflect the time feature value, and a content-based feature value importance is made to reflect the content-based feature value, in operation 1340. The dissimilarity of the two photos is then measured, in operation 1360. By using the amount of change in the dissimilarity value, it can be determined whether or not the situation has changed, and by doing so, a situation change is detected, in operation 1380.

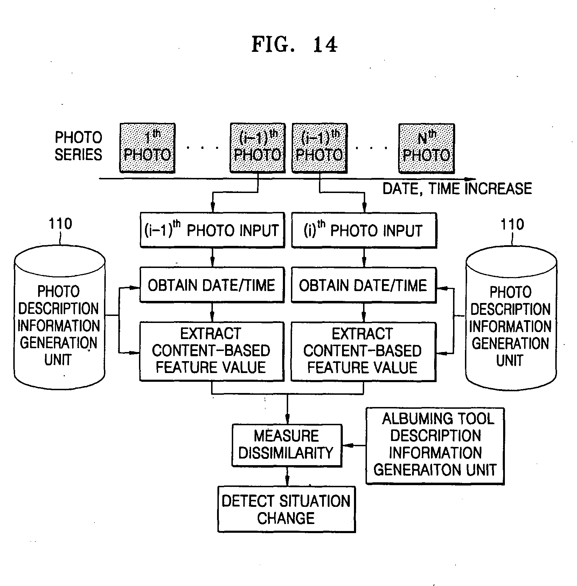

Embodiments of the present invention provide a method and medium for more quickly and effectively albuming digital photos with a large amount of digital photo data by using the information described above, and includes a method and medium for automatically clustering digital photo data based on situations of taken photos. FIG. 14 is a diagram showing an embodiment of operation 1130, shown in FIG. 13, and is a flowchart of a method for automatically clustering digital photo data based on situations where photos are taken.

In FIG. 14, when a first photo to an N-th photo are arranged in order of taken time, whether or not a situation change occurs in an i-th photo is determined by comparing feature values of the i-th photo and the (i-1)-th photo. In embodiments of the present invention, suggested is a method for detecting a situation change point in an arbitrary series of photos by using taken date and time information and multiple content-based feature values.

First, when different N types of content-based feature values are extracted from the i-th photo, the content-based feature values of the i-th photo can be expressed as the following equation 1:

$$F_{content}\ (i) = \{F_1\ (i),\ F_2(i),\ F_3\ (i),...,F_N(i)\} \tag{1}$$

Here, $F_k(i)$, extracted from the i-th photo, indicates each feature value vector that is color, texture, or shape feature value.

The time feature value of the i-th photo is extracted to units of seconds, and can be expressed as the following equation 2:

$$F_{time}\ (i) = \{f_{year},\ f_{month},\ f_{day},\ f_{hour},\ f_{minute},\ f_{second}\} \tag{2}$$

Here, $f_{year}$, $f_{month}$, $f_{day}$, $f_{hour}$, $f_{minute}$, and $f_{second}$ denote year, month, day, hour, minute, and second, respectively, of a time when a photo is taken.

In embodiments of the present invention, in order to achieve a higher clustering performance, as described above, semantic information of a higher level concept included in a photo is expressed as situation-based clustering hint information and according to the hint of each photo, the importance of a feature value to be used for photo clustering can be adaptively set. The importance of each content-based feature value can be determined according to a given situation-based clustering hint and can be expressed as the following equation 3:

$$V_{content}\ (i) = \{v_1\ (i),\ v_2(i)\ ,\ v_3(i),\ ...,\ v_N\ (i)\} \tag{3}$$

Here, $V_k(i)$ denotes the importance of feature value $F_k(i)$, can have a value in a range from 0.0 to 1.0, for example, and according to a give situation-based clustering hint, can be expressed as the following equation 4:

$$V_k(i) = \text{function}_k \text{ (situation-based clustering hint)} \tag{4}$$

Here, $\text{function}_k$ ($\cdot$) denotes the importance measurement function of feature value $F_k(i)$, and has a function value with a situation-based clustering hint as a variable. A measurement function according to the type of a feature value is used.

Also, a value obtained by adding a content-based feature value importance and a time feature value importance can be made to be 1.0, for example. Accordingly, the importance of a time when a photo is taken can be set to a value satisfying the following equation 5:

$$V_{time}(i) + \sum_{k=1}^{N} v_k(i) = 1 \ \ ......(5)$$

The content-based feature value and time feature value reflect the thus determined feature value importance can be expressed as the following equation 6:

$$F'_{content}(i) = \{F_{content}(i), V_{content}(i)\}$$

$$= \{\{F_1(i), v_1(i)\}, \{F_2(i), v_2(i)\}, \{F_3(i), v_3(i)\}, ..., \{F_N(i), v_N(i)\},$$

$$F'_{time}(i) = \{F_{time}(i), V_{time}(i)\} \tag{6}$$

Next, in order to determine the dissimilarity of the i-th photo and the (i-1)-th photo, first, comparison of similarity of each feature value can be performed according to the following equations 7 and 8.

The comparison of similarity between time feature values can be performed according to the following equation 7:

$$D_{time}(i) = \Phi\{F'_{time}(i) - F'_{time}(i-1)\} \tag{7}$$

Here, $\Phi$ is a function scaling a time difference to be more sensitive to a smaller time interval, and for this, a log function and the like can be used, for example. If time information is used without change, in case of a small time interval between two photos, the change in the difference value is insignificant and with the increasing time interval, the change in the difference value increases rapidly. Accordingly, scaling is needed.

The comparison of similarity between content-based feature values can be performed according to the following equation 8:

$$D_{content}(i) = \{F'_{content}(i) - F'_{content}(i-1)\} = \{D_1(i), D_2(i), D_3(i),..., D_N(i)\} \tag{8}$$

The final dissimilarity between the i-th photo and the (i-1)-th photo can be obtained as the following equation 9, according to the time importance and the content-based feature value importance:

$$D_{total}(i) = \exp\left(\left(\frac{D_{time}(i)}{D_{time\_max}} \times (v_1(i) \times D_1(i) + v_2(i) \times D_2(i) + v_3(i) \times D_3(i) + ... + v_N(i) \times D_N(i))\right)^{\alpha}\right) ..$$

$$...(9)$$

Here, $D_{time\_max}$ denotes a maximum time similarity value in a corresponding cluster, and is initialized as 0 in a photo in which a situation change occurs, and until a next situation change occurs, the maximum time similarity value in the situation cluster is always maintained. This decreases with the decreasing time interval between the i-th photo and (i-1)-th photo. The exponential function and the $\alpha$ value can be used so that the amount of change is made small in the case of a smaller dissimilarity value, and is made big in the case of a larger dissimilarity value.

Finally, whether or not a situation change occurs between the i-th photo and the (i-1)-th photo can be determined by using the dissimilarity value of the (i-1)-th photo and the (i-2)-th photo, the dissimilarity value of the i-th photo and the (i-1)-th photo, and the dissimilarity value of the (i+1)-th photo and the i-th photo, together.

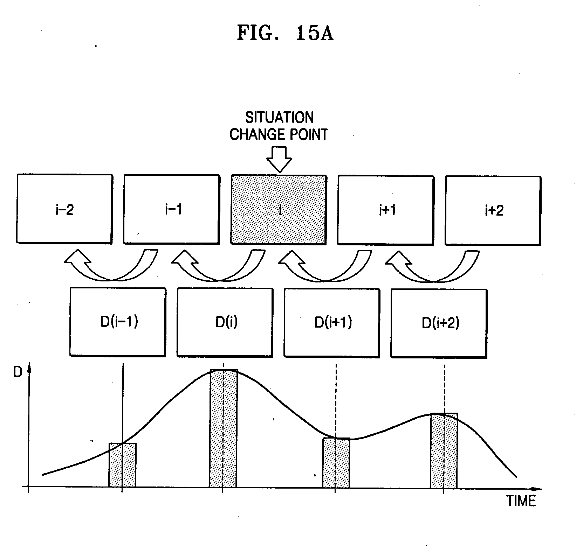

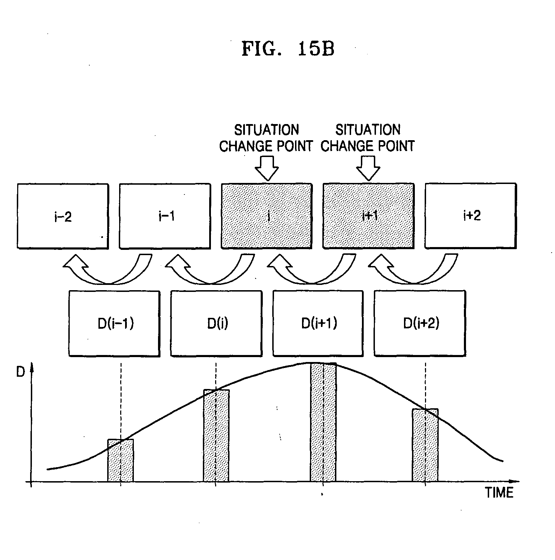

Whether or not a situation change occurs between the i-th photo and the (i-1)-th photo can be determined by the amount of change between dissimilarity values of the neighboring photos. FIG. 15A illustrates the pattern of dissimilarity difference values in the case of a situation cluster formed with one or more photos, and FIG. 15B illustrates the pattern of dissimilarity difference values in the case of a situation cluster formed with one photo.

As the example shown in FIG. 15A, if a situation change occurs in the i-th photo, the dissimilarity value between the i-th photo and the (i-1)-th photo that are taken in different situations is big, while the dissimilarity value between the (i+1)-th photo and the i-th photo that are taken in an identical situation is small.

By applying this pattern, whether or not a situation change occurs between the i-th photo and the (i-1)-th photo can be determined by the following equation 10:

$$\Delta D_{total}\ (i) < \beta \times D_{total}\ (i) \text{ subject to } \Delta D_{total}\ (i-1) > 0 \text{ and } \Delta D_{total}\ (i+1) > 0 \tag{10}$$

Here, $\Delta D_{total}(i) = D_{total}(i) - D_{total}(i-1) + D_{total}(i) - D_{total}(i+1)$, and $\beta$ is a threshold value of a dissimilarity difference value to determine whether or not a situation change occur.

The method for detecting the occurrence of a situation change, described in the equation 10, cannot detect a situation cluster formed with one photo. The situation cluster formed with one photo has a pattern shown in FIG. 15B, not that in FIG. 15A. Accordingly, in order to detect the situation cluster formed with one photo, a method as the following equation 11 can be used:

$$\Delta D'_{total}\ (i) < \gamma \times D_{total}\ (i) \text{ subject to } \Delta D_{total}\ (i-1) > 0 \text{ and } \Delta D_{total}\ (i+1) < 0 \tag{11}$$

Here, $\Delta D'_{total}(i) = D_{total}(i) - D_{total}(i-1)$ and $\gamma$ is a threshold value of a dissimilarity difference value to determine whether or not a situation change in one photo occur.

Embodiments of the present invention can also be embodied as computer readable code(s) (or instruction(s)) on a medium or media, e.g., computer readable recording media. The medium can be any data storage/transferring device that can store/transfer data which can be thereafter be read by a computer system. Examples of the media can include read-only memory (ROM), random-access memory (RAM), CD-ROMs, magnetic tapes, floppy disks, optical data storage devices, carrier waves, distributed networks, and the Internet, for example.

While embodiments of the present invention have been particularly shown and described with reference to exemplary embodiments thereof, it will be understood by those of ordinary skill in the art that various changes in form and details may be made therein without departing from the spirit and scope of the present invention as defined by the following claims. The described embodiments should be considered in descriptive sense only and not for purposes of limitation. Therefore, the scope of the invention is defined not by the detailed description of the invention but by the appended claims, and all differences within the scope will be construed as being included in the present invention.

According to the present invention as described above, a description structure effectively describing information that can be extracted from a photo and parameters appropriately performing the function for situation-based clustering of photos are defined and an effective description structure describing the parameters is suggested.

Also, in addition to information items that can be basically obtained from a photo such as camera information and file information stored in the photo, by using content-based feature value information that can be obtained from the content of a photo such as color, texture, and shape, situation-based photo clustering is performed.

By doing so, with a large number of photos, an album can be constructed conveniently and easily by using information described in relation to digital photos, and a large capacity of photo data can be used to quickly and effectively form an album.

Although a few embodiments of the present invention have been shown and described, it would be appreciated by those skilled in the art that changes may be made in these embodiments without departing from the principles of the invention, the scope of which is defined in the claims and their equivalents.

**EP 1 589 444 A2**

**Claims**

1. An apparatus for detecting a situation change in digital photos, comprising:

   a photo sort unit sorting photos, desired to be situation-based clustered, in order of time;
   a time feature value obtaining unit obtaining predetermined time feature values from each of two contiguous photos among the sorted photos;
   a content-based feature value extraction unit extracting predetermined content-based feature values from each of the two contiguous photos;
   a dissimilarity measuring unit measuring dissimilarity between the two photos by making predetermined time feature value importances reflect respective time feature values, and by making predetermined content-based feature value importances reflect respective content-based feature values; and
   a situation change detection unit detecting a situation change by determining the situation change if an amount of the dissimilarity is equal to or greater than a predetermined threshold.

2. The apparatus of claim 1, wherein a predetermined content-based feature value is generated based on pixel information of a photo, and includes a visual descriptor including color, texture, and shape feature values, and an audio descriptor including a voice feature value.

3. The apparatus of claim 1 or 2, wherein a time feature value importance and a content-based feature value importance are determined by referring to situation-based clustering hints including at least one of entire brightness information of a photo (Brightness), complexity information of the photo (Level of detail), homogeneous texture information of the photo (Homogeneous texture), edge information of the photo (Heterogeneous texture), information on whether the photo is monochrome (Monochromatic), information indicating a degree of colorfulness of a color expression of the photo (colorfulness), information indicating an entire color coherence shown in the photo (color coherence), information indicating a color temperature of a color of the photo (color temperature), information indicating whether a photo file of the photo includes taken time information (Taken time), information indicating that, if the photo and another photo are taken by different cameras in similar time bands and are clustered together, time information of the photo overlaps time information of the other photo and an importance of corresponding time information is lowered when the photo is situation-based clustered (Time overlap), information indicating whether voice information of a user is stored together with the photo when the photo was taken and is included with the photo as an audio clip file (Audio clip), and information indicating voice words and sentence strings recognized in an audio file of the photo (Speech recognition).

4. An apparatus for situation-based clustering of a digital photo album, comprising:

   a photo description information generation unit generating photo description information describing a photo and including at least a photo identifier;
   an albuming tool description information generation unit generating albuming tool description information including a predetermined parameter for situation-based clustering of digital photos;
   an albuming tool performing photo albuming through situation-based clustering by using at least the photo description information and the albuming tool description information;
   a photo group information generation unit generating predetermined photo group description information from an output of the albuming tool; and
   a photo albuming information generation unit generating predetermined photo albuming information by using the photo description information and the predetermined photo group description information for situation-based clustering of the digital photo album.

5. The apparatus of claim 4, wherein among the photo identifier, information on an author of the photo, photo file information, camera information, photographing information, and a content-based feature value, the photo description information includes at least the photo identifier, with the content-based feature value being generated by using pixel information of the photo, and includes a visual descriptor including color, texture, and shape feature values, and/or an audio descriptor including a voice feature value.

6. The apparatus of claim 4 or 5, wherein the albuming tool description information generation unit comprises at least one of:

   a sort key generation unit generating items for sorting photos before clustering the photos;

a situation-based clustering hint generation unit generating a situation-based clustering hint to help photo clustering; and

an importance generation unit generating importances of information to be used in photo clustering.

7. The apparatus of claim 6, wherein the photo sort items of the sort key generation unit include at least one of a file name, a photographing time, and a photo file creation time.

8. The apparatus of claim 6 or 7, wherein the photographing time includes photographing date information and the photo file creation time includes photo file creation date information.

9. The apparatus of any one of claims 6 to 8, wherein the situation-based clustering hint of the situation-based clustering hint unit includes at least one of entire brightness information of the photo (Brightness), complexity information of the photo (Level of detail), homogeneous texture information of the photo (Homogeneous texture), edge information of the photo (Heterogeneous texture), information on whether the photo is monochrome (Monochromatic), information indicating a degree of colorfulness of a color expression of the photo (colorfulness), information indicating an entire color coherence shown in the photo (color coherence), information indicating a color temperature of a color of the photo (color temperature), information indicating whether a photo file of the photo includes taken time information (Taken time), information indicating that, if the photo and another photo are taken by different cameras in similar time bands and are clustered together, time information of the photo overlaps time information of the other photo and an importances of corresponding time information is lowered when the photo is situation-based clustered (Time overlap), information indicating whether voice information of a user is stored together with the photo when the photo was taken and is included with the photo as an audio clip file (Audio clip), and information indicating voice words and sentence strings recognized in an audio file of the photo (Speech recognition).

10. The apparatus of any one of claims 6 to 9, wherein the importances of the importance generation unit are based on at least one of:

information (taken time) setting an importance of time information on a time when the photo is taken; and
information (low-level feature) setting an importance of content-based feature value information of the photo.

11. The apparatus of claim 10, wherein the information (low-level feature) setting the importance of content-based feature value information of the photo comprises:

information setting an importance of a moving picture experts group (MPEG)-7 Visual Descriptor; and
information setting an importance of a MPEG-7 Audio Descriptor.

12. The apparatus of any one of claims 4 to 11, wherein the albuming tool comprises:

a situation-based photo clustering tool clustering digital photo data based on situations.

13. The apparatus of claim 12, wherein the situation-based photo clustering tool comprises:

a photo sort unit sorting photos, desired to be situation-based clustered, in order of time;
a time feature value obtaining unit obtaining, from the photo description information generation unit, time feature values from each of two contiguous photos among the sorted photos;
a content-based feature value extraction unit extracting, from the photo description information generation unit, content-based feature values from each of the two contiguous photos;
a dissimilarity measuring unit measuring dissimilarity between the two photos by making time feature value importances, obtained from the albuming tool description information generation unit, reflect respective time feature values obtained from the time feature value obtaining unit, and by making predetermined content-based feature value importances, obtained from the albuming tool description information generation unit, reflect respective content-based feature values extracted in the content-based feature value extraction unit; and
a situation change detection unit detecting a situation change by determining the situation change based on an amount of the dissimilarity value.

14. The apparatus of claim 13, wherein the respective time feature value importances and the respective predetermined content-based feature value importances are determined by referring to situation-based clustering hints of the albuming tool description information generation unit.

15. The apparatus of any one of claims 4 to 14, wherein the photo group description information of the photo group information generation unit includes at least one of situation-based photo groups by clustering situation-based photos, and a situation-based photo group comprises a situation identifier identifying a situation, a series of photos formed with a plurality of photos determined by photo identifiers, and a photo key identifier allowing identifying of one or more representative photos among photos in a photo group.

16. A method for detecting a situation change in digital photos, comprising:

sorting photos, desired to be situation-based clustered, in order of time;
obtaining respective time feature values and respective predetermined content-based feature values from each of two contiguous photos among the sorted photos;
measuring a dissimilarity between the two photos by making predetermined time feature value importances reflect respective time feature values, and by making predetermined content-based feature value importances reflect respective content-based feature values; and
detecting a situation change by determining the situation change if an amount of the dissimilarity is equal to or greater than a predetermined threshold.

17. The method of claim 16, wherein the detecting of the situation change comprises determining the situation change if an amount of change, between a dissimilarity between one of the contiguous photos and a previous photo, not same as another one of the contiguous photos, and a dissimilarity between the other one of the contiguous photos and a subsequent photo, is greater than a threshold.

18. The method of claim 16 or 17, wherein a predetermined content-based feature value is generated by using pixel information of respective photos, and includes a visual descriptor including color, texture, and shape feature values, and/or an audio descriptor including a voice feature value.

19. The method of any one of claims 16 to 18, wherein a time feature value importance and a content-based feature value importance are determined by referring to a situation-based clustering hint including at least one of entire brightness information of a photo (Brightness), a complexity information of the photo (Level of detail), homogeneous texture information of the photo (Homogeneous texture), edge information of the photo (Heterogeneous texture), information on whether the photo is monochrome (Monochromatic), information indicating a degree of colorfulness of a color expression of the photo (colorfulness), information indicating entire color coherence shown in the photo (color coherence), information indicating a color temperature of a color of the photo (color temperature), information indicating whether a photo file of the photo includes taken time information (Taken time), information indicating that, if the photo and another photo taken by different cameras in similar time bands and are clustered together, time information of the photo overlaps time information of the other photo and an importance of corresponding time information is lowered when the photo is situation-based clustered (Time overlap), information indicating whether voice information of a user is stored together with the photo when the photo was taken and is included as an audio clip file (Audio clip), and information indicating voice words and sentence strings recognized in an audio file of the photo (Speech recognition).

20. A method for situation-based clustering of a digital photo album, comprising:

generating photo description information by extracting at least one of camera information on a camera taking a photo, photographing information of the photo, and a content-based feature value of the photo;
generating albuming tool description information including a predetermined parameter for situation-based clustering of digital photos;
performing photo albuming through situation-based clustering by using at least the photo description information and the albuming tool description information;
generating photo group description information by using a result of the situation-based clustering; and
generating predetermined photo albuming information by using the photo description information and the photo group description information to situation-based cluster the digital photo album.

21. The method of claim 20, wherein in the generating of the photo description information, among the photo identifier, information on an author of the photo, photo file information, camera information, photographing information, and content-based feature values, the photo description information includes at least the photo identifier, with the content-based feature value being generated by using pixel information of the photo, and includes a visual descriptor including color, texture, and shape feature values, and/or an audio descriptor including a voice feature value.

22. The method of claim 20 or 21, wherein in the generating of the albuming tool description information, the albuming tool description information generation comprises at least one of:

sort key sorting photos before clustering of the photos;
situation-based clustering hint generating a situation-based clustering hint to help photo clustering; and
importance generating importances of information to be used in photo clustering.

23. The method of claim 22, wherein a sort key in the sort key sorting includes at least one of a file name, a photographing time, and a photo file creation time.

24. The method of claim 22 or 23, wherein the situation-based clustering hint includes at least one of entire brightness information of the photo (Brightness), complexity information of the photo (Level of detail), homogeneous texture information of the photo (Homogeneous texture), edge information of the photo (Heterogeneous texture), information on whether the photo is monochrome (Monochromatic), information indicating a degree of colorfulness of a color expression of the photo (colorfulness), information indicating an entire color coherence shown in the photo (color coherence), information indicating a color temperature of a color of the photo (color temperature), information indicating whether a photo file of the photo includes taken time information (Taken time), information indicating that; if the photo and another photo taken by different cameras in similar time bands and are clustered together, time information of the photo overlaps time information of the other photo and an importance of corresponding time information is lowered when the photo is situation-based clustered (Time overlap), information indicating whether voice information of a user stored together with the photo when the photo was taken and is included with the photo as an audio clip file (Audio clip), and information indicating voice words and sentence strings recognized in an audio file of the photo (Speech recognition).

25. The method of any one of claims 22 to 24, wherein the importances are based on at least one of:

information (taken time) setting an importance of time information on a time when the photo is taken; and
information (low-level feature) setting an importance of content-based feature value information of the photo.

26. The method of claim 25, wherein the information (low-level feature) setting the importance of content-based feature value information of the photo comprises:

information setting an importance of a MPEG-7 Visual Descriptor; and
information setting an importance of a MPEG-7 Audio Descriptor.

27. The method of any one of claims 20 to 26, wherein the performing of the photo albuming comprises:

sorting photos, desired to be situation-based clustered, in order of time;
obtaining time feature values and predetermined content-based feature values from each of two contiguous photos among the sorted photos;
measuring a dissimilarity between the two photos by making predetermined time feature value importances reflect respective time feature values, and by making predetermined content-based feature value importances reflect respective content-based feature values; and
detecting a situation change by determining the situation change based on an amount of the dissimilarity value.

28. The method of claim 27, wherein the time feature value importances and the content-based feature value importances are determined by referring to situation-based clustering hints.

29. The method of any one of claims 20 to 28, wherein in the generating of the predetermined photo albuming information, the photo group description information includes at least one of situation-based photo groups by clustering situation-based photos, and with the situation-based photo group comprising a situation identifier identifying a situation, a series of photos formed with a plurality of photos determined by photo identifiers, and a photo key identifier allowing identifying of one or more representative photos among the photos in a photo group.

30. A medium comprising computer readable instructions implementing the method of any one of claims 16 through 29.

# FIG. 1

```
                        ┌─────────────────────────────┐ 120
                        │  ALBUMING TOOL DESCRIPTION  │
                        │ INFORMATION GENERATION UNIT │
                        └─────────────────────────────┘
                                      │ 130
              ┌───────────────────────▼───────────────┐
   100        │           ALBUMING TOOL               │        140
┌──────────┐  │  ┌────────────────────────────────┐   │  ┌────────────────┐
│  PHOTO   │  │  │     SITUATION-BASED            │   │  │  PHOTO GROUP   │
│INPUT UNIT│─▶│  │        PHOTO                   │───┼─▶│  INFORMATION   │
└──────────┘  │  │    CLUSTERING TOOL             │   │  │ GENERATION UNIT│
      │       │  └────────────────────────────────┘   │  └────────────────┘
      │       └───────────135─────▲──────────────────┘
      │                           │ 110                        150          160
      │       ┌───────────────────────────┐  ┌────────────────────┐   ┌──────────┐
      │       │  PHOTO DESCRIPTION         │  │  PHOTO ALBUMING    │   │  ALBUM   │
      └──────▶│     INFORMATION           │─▶│   INFORMATION      │──▶│ DATABASE │
              │  GENERATION UNIT          │  │  GENERATION UNIT   │   └──────────┘
              └───────────────────────────┘  └────────────────────┘
```

# FIG. 2

120

| 200 | 220 | 240 |
|---|---|---|
| SORT KEY GENERATION UNIT | SITUATION-BASED CLUSTERING HINT GENERATION UNIT | IMPORTANCE GENERATION UNIT |

# FIG. 3

135

| 300 | 320 | 340 | 360 | 380 |
|---|---|---|---|---|
| PHOTO SORT UNIT | TIME FEATURE VALUE OBTAINING UNIT | CONTENT-BASED FEATURE VALUE EXTRACTION UNIT | DISSIMILARITY MEASURING UNIT | SITUATION CHANGE DETECTION UNIT |

110

| PHOTO DESCRIPTION INFORMATION GENERATION UNIT |
|---|

120

| ALBUMING TOOL DESCRIPTION INFORMATION GENERATION UNIT |
|---|

FIG. 4

```
                          ┌─────────────────────┐
                          │  Photo description  │
                          │        (40)         │
                          └─────────────────────┘
                                    │
    ┌──────────┬──────────┬─────────┼──────────────────┬──────────────────────┐
    ▼          ▼          ▼                             ▼                      ▼
┌─────────┐┌─────────┐┌──────────────────┐   ┌────────────────────┐┌──────────────────────────┐
│Photo ID ││ Author  ││ File information │   │ Camera information ││Content-based information │
│  (400)  ││  (420)  ││      (440)       │   │       (460)        ││         (480)            │
└─────────┘└─────────┘└──────────────────┘   └────────────────────┘└──────────────────────────┘
                              │                         │                     │
                   ┌──────────────────────┐  ┌──────────────────────┐ ┌──────────────────────┐
                   │ File name (442)      │  │IsExifInformation (462)│ │ Visual descriptors  │
                   ├──────────────────────┤  ├──────────────────────┤ │      (482)          │
                   │ File format (444)    │  │ Camera model (464)   │ └──────────────────────┘
                   ├──────────────────────┤  ├──────────────────────┤ ┌──────────────────────┐
                   │ File size (446)      │  │ Taken date/time (466)│ │ Audio descriptors   │
                   ├──────────────────────┤  ├──────────────────────┤ │      (484)          │
                   │File creation date/   │  │GPS INFORMATION (468) │ └──────────────────────┘
                   │    time (448)        │  ├──────────────────────┤
                   └──────────────────────┘  │ Image width (470)    │
                                             ├──────────────────────┤
                                             │ Image height (472)   │
                                             ├──────────────────────┤
                                             │ Flash on/off (474)   │
                                             ├──────────────────────┤
                                             │ Brightness (476)     │
                                             ├──────────────────────┤
                                             │ Contrast (478)       │
                                             ├──────────────────────┤
                                             │ Sharpness (479)      │
                                             └──────────────────────┘
```

EP 1 589 444 A2

FIG. 5

```
                              ┌─────────────────────────┐
                              │ Albuming tool description│
                              │          (50)            │
                              └─────────────────────────┘
```

| Sort key (500) | Situation-based clustering hint (520) | Feature importance (560) |
|---|---|---|
| File name (502) | Brightness (522) | Taken time (562) |
| Taken date/time (504) | Level of detail (524) | Importance value (564) |
| File creation date/time (506) | Homogeneous texture (526) | Low-level feature (566) |
| | Heterogeneous texture (528) | Visual descriptor (568) |
| | Monochromatic (530) | Importance value (570) |
| | Colorfulness (532) | Audio descriptor (572) |
| | Color coherence (534) | Importance value (574) |
| | Color temperature (536) | |
| | Taken time (538) | |
| | Time overlap (540) | |
| | Audio clip (542) | |
| | Recognized speech (544) | |

EP 1 589 444 A2

FIG. 6

```
        ┌──────────────────────────┐
        │  Photo group description │
        │          (6000)          │
        └──────────────────────────┘
                     │
                     ▼
        ┌──────────────────────────┐
        │ Situation-based Photo group│
        │          (6100)          │
        └──────────────────────────┘
             │        │        │
      ┌──────┘        │        └──────┐
      ▼               ▼               ▼
┌──────────────┐ ┌──────────────┐ ┌──────────────────────┐
│ Situation ID │ │ Key photo IDs│ │ Photo series (6400)  │
│   (6200)     │ │   (6300)     │ └──────────────────────┘
└──────────────┘ └──────────────┘           │
                                            ▼
                                 ┌──────────────────────┐
                                 │  Photo IDs (6410)    │
                                 └──────────────────────┘
```

FIG. 7

FIG. 8

EP 1 589 444 A2

33

**FIG. 9**

# FIG. 10

FIG. 11

```
           ( START )
               │
               ▼
  ┌─────────────────────────┐
  │      INPUT PHOTO         │──1100
  └─────────────────────────┘
               │
               ▼
  ┌─────────────────────────┐
  │     GENERATE PHOTO       │──1110
  │  DESCRIPTION INFORMATION │
  └─────────────────────────┘
               │
               ▼
  ┌─────────────────────────┐
  │  GENERATE ALBUMING TOOL  │──1120
  │  DESCRIPTION INFORMATION │
  └─────────────────────────┘
               │
               ▼
  ┌─────────────────────────┐
  │     SITUATION-BASED      │──1130
  │   CLUSTERING OF PHOTOS   │
  └─────────────────────────┘
               │
               ▼
  ┌─────────────────────────┐
  │   GENERATE PHOTO GROUP   │──1140
  │  DESCRIPTION INFORMATION │
  └─────────────────────────┘
               │
               ▼
  ┌─────────────────────────┐
  │  GENERATE PHOTO ALBUMING │──1150
  │       INFORMATION        │
  └─────────────────────────┘
               │
               ▼
           (  END  )
```

# FIG. 12

1110

| EXTRACT CAMERA INFORMATION, AND PHOTOGRAPHING INFORMATION | — 1200 |

| EXTRACT CONTENT-BASED FEATURE VALUE | — 1220 |

| GENERATE PHOTO DESCRIPTION INFORMATION | — 1240 |

# FIG. 13

1130

| SORT DIGITAL PHOTOS IN ORDER OF TAKEN TIME | — 1300 |

| EXTRACT TIME FEATURE VALUES AND CONTENT-BASED FEATURE VALUES OF TWO NEIGHBORING PHOTOS | — 1320 |

| MAKE IMPORTANCE REFLECTED IN TIME FEATURE VALUES AND CONTENT-BASED FEATURE VALUES | — 1340 |

| MEASURE DISSIMILARITY | — 1360 |

| DETECT SITUATION CHANGE BY USING AMOUNT OF CHANGE IN DISSIMILARITY VALUE | — 1380 |

FIG. 14

PHOTO SERIES

1$^{th}$ PHOTO · · · (i–1)$^{th}$ PHOTO | (i–1)$^{th}$ PHOTO · · · N$^{th}$ PHOTO

DATE, TIME INCREASE

110

(i–1)$^{th}$ PHOTO INPUT | (i)$^{th}$ PHOTO INPUT

110

PHOTO DESCRIPTION INFORMATION GENERATION UNIT

OBTAIN DATE/TIME | OBTAIN DATE/TIME

PHOTO DESCRIPTION INFORMATION GENERATION UNIT

EXTRACT CONTENT–BASED FEATURE VALUE | EXTRACT CONTENT–BASED FEATURE VALUE

MEASURE DISSIMILARITY

ALBUMING TOOL DESCRIPTION INFORMATION GENERAITON UNIT

DETECT SITUATION CHANGE

# FIG. 15A

# FIG. 15B

SITUATION
CHANGE POINT

SITUATION
CHANGE POINT

| i-2 | i-1 | i | i+1 | i+2 |
|-----|-----|---|-----|-----|

| D(i-1) | D(i) | D(i+1) | D(i+2) |
|--------|------|--------|--------|

D

TIME